# FASCICULE DE BREVET EUROPEEN

(11) **EP 3 610 131 B1**
(45) Date de publication et mention de la délivrance du brevet: **22.12.2021**
(21) Numéro de dépôt: 18732403.3
(22) Date de dépôt: 10.04.2018
(51) Int. Cl.: F01D 5/14, F01D 5/18, G01L 19/00, G01M 3/26

(54) **AUBE DE TURBINE PRÉSENTANT UNE STRUCTURE AMÉLIORÉE**
TURBINENSCHAUFEL MIT VERBESSERTER STRUKTUR
TURBINE BLADE HAVING AN IMPROVED STRUCTURE

(30) Priorité: 10.04.2017 FR 1700389
(43) Date de publication de la demande: 19.02.2020
(73) Titulaire: Safran, 75015 Paris (FR)
(72) Inventeur: PAQUIN, Sylvain, 77550 Moissy-Cramayel (FR); CARIOU, Romain Pierre, 77550 Moissy-Cramayel (FR); FLAMME, Thomas Michel, 77550 Moissy-Cramayel (FR); ROLLINGER, Adrien Bernard Vincent, 77550 Moissy-Cramayel (FR)
(74) Mandataire: Cabinet Beau de Loménie
(86) Numéro de dépôt international: PCT/FR2018/000080
(87) Numéro de publication internationale: WO 2018/189433

(56) Documents cités:
- EP-A1- 1 947 295
- FR-A5- 2 205 097
- US-A- 4 526 512
- US-A1- 2010 080 687

## Description

### DOMAINE DE L'INVENTION

La présente invention concerne le domaine des aubes de turbines à gaz haute pression aéronautique, plus particulièrement la structure interne de ces aubes, et une turbine à gaz comportant de telles aubes.

### ETAT DE LA TECHNIQUE ANTERIEURE

Les aubes mobiles d'une turbine à gaz d'un moteur d'avion, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Par ailleurs, une élévation de la température des gaz de la turbine haute-pression permet d'améliorer le rendement d'un moteur, donc le rapport entre la poussée du moteur et le poids d'un avion propulsé par ce moteur. Par conséquent, des efforts sont entrepris afin de réaliser des aubes de turbine qui peuvent résister à des températures de plus en plus élevées, et afin d'optimiser le refroidissement de ces aubes.

Il est ainsi connu de munir ces aubes de circuits de refroidissement visant à réduire la température de ces dernières. Grâce à de tels circuits, de l'air de refroidissement (ou air «froid»), qui est généralement introduit dans l'aube par son pied, traverse celle-ci en suivant un trajet formé par des cavités pratiquées dans l'épaisseur de l'aube avant d'être éjecté par des orifices s'ouvrant à la surface de l'aube.

De tels circuits de refroidissement sont dits « avancés » quand ils sont composés de plusieurs cavités indépendantes dans l'épaisseur de l'aube, ou quand certaines de ces cavités sont dédiées au refroidissement localisé. Ces cavités permettent de définir une aube compatible avec les exigences de performance des moteurs et de durée de vie des pièces. On peut par exemple mentionner comme exemple de circuit de refroidissement avancé le circuit de refroidissement tel que présenté dans EP 1741875 ou le circuit de refroidissement présenté dans EP 1947295.

De tels circuits avancés présentent l'inconvénient d'engendrer une grande différence de température entre les parois externes de l'aube au contact de la veine et les parois au cœur de l'aube. Ces différences de températures importantes induisent des dilatations et des contraintes pouvant mettre en péril la tenue mécanique de l'aube en fonctionnement et ainsi impacter sa durée de vie. Les dilatations des parois dans le plan ortho-radial engendrent notamment des contraintes autour des zones de jonction entre le cœur de l'aube et les parois de l'aube pouvant entrainer une rupture.

Les solutions proposées pour répondre à ces problématiques consistent habituellement à augmenter l'épaisseur des différentes parois afin d'en améliorer la tenue. On comprend toutefois bien que cela pénalise les performances générales de l'aube.

### PRESENTATION DE L'INVENTION

La présente invention concerne une aube de turbine aéronautique telle que définie dans la revendication 1, s'étendant dans la direction radiale depuis un pied d'aube jusqu'à une cloison supérieure, ladite aube comprenant une pluralité de cavités internes définissant au moins un circuit de refroidissement, lesdites cavités internes étant chacune délimitées par des parois parmi des parois internes, une paroi d'intrados, une paroi d'extrados, le pied d'aube et la cloison supérieure,

ladite aube étant caractérisée en ce qu'elle comprend au moins une poutre de renfort disposée au sein de l'une desdites cavités internes, et reliant le pied d'aube à la cloison supérieure, ladite poutre de renfort étant disjointe des parois internes, de la paroi d'intrados et de la paroi d'extrados.

L'aube comprend une poutre de renfort disposée dans une cavité interne s'étendant depuis la paroi d'intrados jusqu'à la paroi d'extrados.

La poutre de renfort est creuse. Ladite poutre de renfort présente des fentes et/ou trous.

Selon un mode de réalisation, ladite poutre est centrée sur une section médiane de l'aube selon une vue en coupe dans la direction radiale.

Selon un mode de réalisation, ladite aube comprend deux poutres de renfort disposées dans deux cavités internes distinctes.

Le présent exposé concerne également une turbine à gaz comportant des aubes du présent exposé.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en perspective d'une aube de turbine selon la présente invention ;
- la figure 2 est une vue en coupe d'une telle aube selon un mode de réalisation non revendiqué ;
- la figure 3 est une vue en coupe d'une aube selon l'invention.

Sur l'ensemble des figures, les éléments en commun sont repérés par des références numériques identiques.

### DESCRIPTION DETAILLEE D'EXEMPLES DE REALISATION

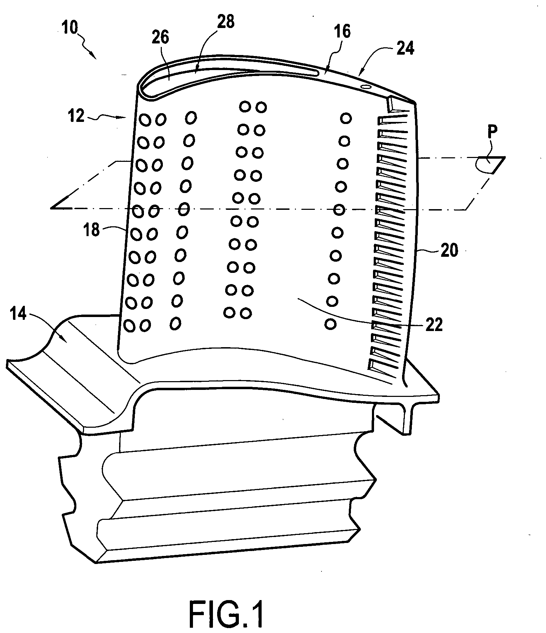

On décrit ci-après l'invention en références aux figures 1 à 3.

La figure 1 illustre une aube mobile 10, par exemple métallique, d'une turbine haute-pression de turbomachine. Bien entendu, la présente invention peut également s'appliquer à d'autres aubes mobiles ou fixes de la turbomachine.

L'aube 10 comporte une surface aérodynamique 12 (ou pale) qui s'étend radialement entre un pied d'aube 14 et une tête d'aube 16.

Le pied d'aube 14 est adapté pour être monté sur un disque du rotor de la turbine haute-pression, la tête d'aube 16 étant opposée radialement au pied d'aube 14.

La surface aérodynamique 12 présente quatre zones distinctes : un bord d'attaque 18 disposé en regard de l'écoulement des gaz chauds issus de la chambre de combustion de la turbomachine, un bord de fuite 20 opposé au bord d'attaque 18, une paroi d'intrados 22 et une paroi d'extrados 24, ces parois d'intrados 22 et d'extrados 24 reliant le bord d'attaque 18 au bord de fuite 20.

Au niveau de la tête d'aube 16, la surface aérodynamique 12 de l'aube est fermée par une paroi transversale 26. Par ailleurs, la surface aérodynamique 12 s'étend radialement légèrement au-delà de cette paroi transversale 26 de façon à former une cuvette 28, dénommée ci-après baignoire de l'aube. Cette baignoire 28 possède donc un fond formé par la paroi transversale 26, un bord formé par la surface aérodynamique 12 et elle est ouverte vers la tête d'aube 16.

L'aube 10 comprend typiquement un ou plusieurs circuits de refroidissement formés par la structure interne de l'aube 10 que l'on décrit ci-après.

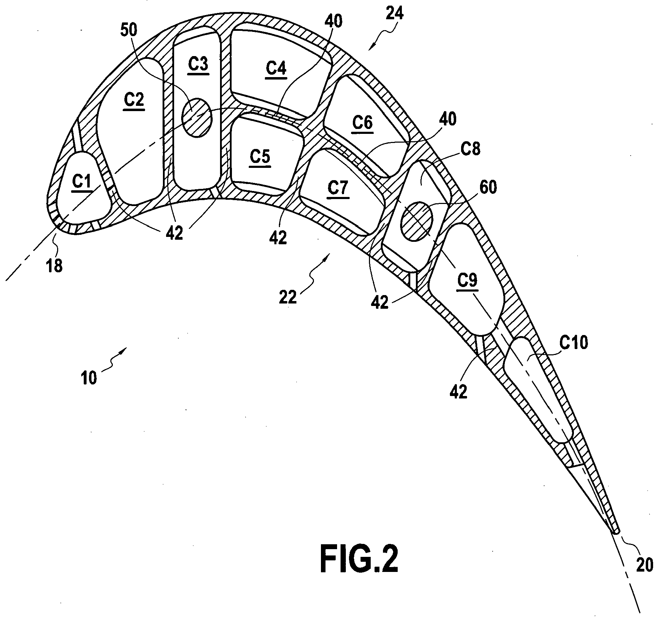

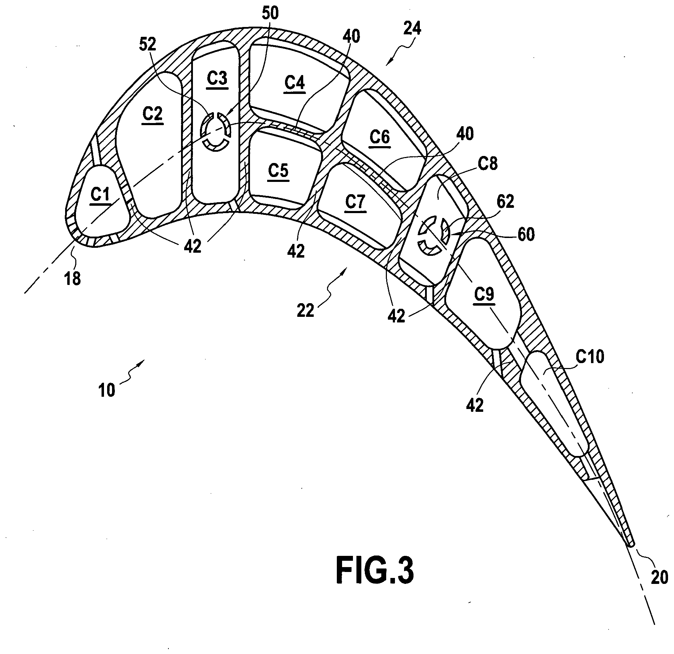

Les figures 2 et 3 sont deux vues en coupe de deux variantes d'une aube telle que présentée sur la figure 1 selon le plan de coupe P tel que visible sur la figure 1.

Comme on le voit sur ces figures, l'aube 10 est creuse, et son volume interne est composé d'une pluralité de cavités internes séparées par des parois internes à l'aube 10.

Dans les exemples représentés sur ces figures, l'aube 10 comprend 10 cavités internes désignées par les références C1 à C10.

Comme on le voit sur les figures, pour l'exemple représenté, une partie de ces cavités internes, en l'occurrence les cavités internes C1, C2, C3, C8, C9 et C10 s'étendent entre la paroi d'intrados 22 et la paroi d'extrados 24. Les cavités internes restantes, à savoir les cavités internes C4 à C7, s'étendent chacune entre l'une ou l'autre de la paroi d'intrados 22 et de la paroi d'extrados 24 et une paroi interne 40 centrale. Des parois internes 42 transversales s'étendant entre la paroi d'intrados 22 et la paroi d'extrados 24 permettent de séparer les différentes cavités internes. On comprend bien qu'un tel exemple de structure interne de l'aube 10 est uniquement illustratif, et que l'invention présentée pourra s'appliquer quelle que soit la structure interne de l'aube 10.

Comme indiqué en préambule de la présente demande de brevet, l'une des problématiques majeures pour la conception d'une telle aube 10 concerne la tenue en fonctionnement notamment en raison des écarts de dilatations se produisant dans les différentes régions de l'aube 10, et plus précisément des contraintes qui en résultent dans un plan ortho-radial de l'aube 10.

L'aube 10 telle que proposée comprend une ou plusieurs poutres de renfort s'étendant au sein de cavités internes de l'aube 10, depuis le pied de l'aube 10 jusqu'à sa cloison supérieure, typiquement la paroi transversale 26 définissant le fond de la baignoire 28 de l'aube 10.

Dans l'exemple représenté sur la figure 2, l'aube 10 comprend deux poutres de renfort 50 et 60 disposées au sein des cavités internes C3 et C8 respectivement.

Chacune de ces poutres de renfort 50 et 60 s'étend depuis le pied de l'aube 10 jusqu'à sa cloison supérieure, et est disposée au sein d'une cavité interne, tout en demeurant disjoint de la paroi d'intrados 22, de la paroi d'extrados 24 et des parois internes 40 et 42.

Les poutres de renfort 50 et 60 sont ainsi chacune situées entièrement dans une veine de refroidissement de l'aube 10, et sont donc à la température de l'air circulant dans la veine de refroidissement considérée, et ne sont ainsi pas impactées directement par la température de la paroi d'intrados 22 et de la paroi d'extrados 24. Le pied de l'aube est en effet situé en dessous de la veine d'air, et fonctionne à la température de l'air de refroidissement de l'aube 10.

La présence de telles poutres de renfort 50 et 60 permet ainsi de retenir l'effort centrifuge sans engendrer d'efforts dans le plan ortho-radial. Dans la mesure où les poutres de renfort 50 et 60 retiennent l'effort centrifuge, les autres parois de l'aube 10 peuvent être amincies, ce qui permet ainsi de minimiser voire d'annuler l'impact des poutres de renfort sur le poids de l'aube 10 et sur son circuit de refroidissement.

Les poutres de renfort 50 et 60 sont typiquement centrées sur une ligne médiane de l'aube 10 selon une vue en coupe dans la direction radiale, comme visible sur les figures 2 et 3, ce qui améliore la reprise de l'effort centrifuge par les poutres de renfort 50 et 60.

Le nombre et l'emplacement des poutres de renfort peuvent varier selon la géométrie de l'aube 10 et selon les conditions dans lesquelles elle est destinée à évoluer. On comprend bien en effet que le mode de réalisation représenté sur la figure 2 qui comprend deux poutres de renfort n'est pas limitatif, et que l'aube 10 peut comporter une unique poutre de renfort, ou encore 3, 4, 5 ou plus de 5 poutres de renfort disposées dans des cavités internes distinctes ou plusieurs poutres de renfort pouvant être disposées au sein d'une même cavité interne.

Les poutres de renfort selon l'invention sont creuses. La figure 2 représente un example non revendiqué dans lequel les poutres de renfort 50 et 60 sont pleines, et la figure 3 représente un mode de réalisation selon l'invention dans lequel les poutres de renfort 50 et 60 sont creuses.

Dans le cas où les poutres de renfort sont creuses, elles présentent des perçages prenant la forme de fentes et/ou de trous permettant ainsi de réaliser une circulation d'air au sein des poutres de renfort, par exemple pour définir un flux de fluide de refroidissement devant être acheminé vers une zone critique de l'aube 10 dans la mesure où un tel flux est isolé thermiquement par rapport à la paroi d'intrados 22 et à la paroi d'extrados 24. Les perçages réalisés dans les poutres de renfort 50 et 60 sont repérés par les références numériques 50 et 62 respectivement sur la figure 3.

Les poutres de renfort présentent typiquement une section circulaire, ovale ou ovoïde, étant entendu que dans le cas d'une aube 10 présentant plusieurs poutres de renfort, celles-ci peuvent présenter des géométries distinctes. Les poutres de renfort peuvent par ailleurs présenter une section constante ou variable sur la hauteur de l'aube 10.

L'aube 10 telle que proposée permet ainsi de cumuler les avantages liés à un circuit présentant plusieurs cavités dans l'épaisseur de l'aube sans engendrer de contraintes dans le plan ortho-radial, qui apparaissent usuellement dans de tels circuits du fait de l'écart de dilatation entre les différentes parois de l'aube 10.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, les nombres de circuits de refroidissement et de cavités composant chacun de ces circuits ne sont pas limités à ceux présentés dans cet exemple. Par conséquent, la description et les dessins doivent être considérés dans un sens illustratif plutôt que restrictif.

## Revendications

1. Aube (10) de turbine aéronautique s'étendant dans la direction radiale depuis un pied d'aube (14) jusqu'à une cloison supérieure (26), ladite aube (10) comprenant une pluralité de cavités internes (C1-C10) définissant au moins un circuit de refroidissement, lesdites cavités internes (C1-C10) étant chacune délimitées par des parois parmi des parois internes (40, 42), une paroi d'intrados (22), une paroi d'extrados (24), le pied d'aube (14) et la cloison supérieure (26),
ladite aube (10) comprenant au moins une poutre de renfort (50, 60) disposée au sein de l'une desdites cavités internes (C3, C8), et reliant le pied d'aube (14) à la cloison supérieure (26), ladite poutre de renfort (50, 60) étant disjointe des parois internes (40, 42), de la paroi d'intrados (22) et de la paroi d'extrados (24),
**caractérisée en ce que** ladite poutre de renfort (50, 60) est creuse et présente des fentes et/ou trous (52, 62) de manière à permettre de réaliser une circulation d'air au sein de la poutre de renfort.

2. Aube (10) selon la revendication 1, comprenant une poutre de renfort (50, 60) disposée dans une cavité interne (C3, C8) s'étendant depuis la paroi d'intrados (22) jusqu'à la paroi d'extrados (24).

3. Aube (10) selon l'une des revendications 1 à 2, dans laquelle ladite poutre de renfort (50, 60) est centrée sur une section médiane de l'aube (10) selon une vue en coupe dans la direction radiale.

4. Aube (10) selon l'une des revendications 1 à 3, comprenant deux poutres de renfort (50, 60) disposées dans deux cavités internes (C3, C8) distinctes.

5. Turbine à gaz comportant des aubes (10) selon l'une quelconque des revendications 1 à 4.

## Patentansprüche

1. Luftfahrt-Turbinenschaufel (10), die sich in der radialen Richtung von einem Schaufelfuß (14) bis zu einer oberen Trennwand (26) erstreckt, wobei die Schaufel (10) eine Vielzahl von inneren Hohlräumen (C1 bis C10) umfasst, die mindestens einen Kühlkreis definieren, wobei die inneren Hohlräume (C1 bis C10) jeweils durch Wände unter Innenwänden (40, 42), eine Druckseitenwand (22), eine Saugseitenwand (24), den Schaufelfuß (14) und die obere Trennwand (26) abgegrenzt sind,
wobei die Schaufel (10) mindestens einen Verstärkungsträger (50, 60) umfasst, der im Inneren von einem der inneren Hohlräume (C3, C8) angeordnet ist und den Schaufelfuß (14) mit der oberen Trennwand (26) verbindet, wobei der Verstärkungsträger (50, 60) von den Innenwänden (40, 42), von der Druckseitenwand (22) und von der Saugseitenwand (24) getrennt ist,
**dadurch gekennzeichnet, dass** der Verstärkungsträger (50, 60) hohl ist und Schlitze und/oder Löcher (52, 62) aufweist, derart dass das Ausführen einer Luftzirkulation im Inneren des Verstärkungsträgers ermöglicht wird.

2. Schaufel (10) nach Anspruch 1, die einen Verstärkungsträger (50, 60) umfasst, der in einem inneren Hohlraum (C3, C8) angeordnet ist und sich von der Druckseitenwand (22) bis zur Saugseitenwand (24) erstreckt.

3. Schaufel (10) nach einem der Ansprüche 1 bis 2, wobei der Verstärkungsträger (50, 60) in einer Ansicht eines Schnitts in der radialen Richtung auf einen mittleren Abschnitt der Schaufel (10) zentriert ist.

4. Schaufel (10) nach einem der Ansprüche 1 bis 3, die zwei Verstärkungsträger (50, 60) umfasst, die in zwei getrennten inneren Hohlräumen (C3, C8) angeordnet sind.

5. Gasturbine, die Schaufeln (10) nach einem der Ansprüche 1 bis 4 umfasst.

## Claims

1. An aviation turbine blade (10) extending in the radial direction from a blade root (14) as far as an upper partition wall (26), said blade (10) comprising a plurality of inner cavities (C1-C10) defining at least one cooling circuit, each of said inner cavities (C1-C10) being defined by walls among inner walls (40, 42), a lower surface wall (22), an upper surface wall (24), the blade root (14) and the upper partition wall (26),
said blade (10) comprising at least one reinforcing beam (50, 60) disposed inside one of said inner cavities (C3, C8), and connecting the blade root (14) to the upper partition wall (26), said reinforcing beam (50, 60) not being connected to the inner walls (40, 42), the lower surface wall (22) and the upper surface wall (24),
**characterized in that** said reinforcing beam (50, 60) is hollow and has slots and/or holes (52, 62) soas to allow air circulation within the reinforcing beam.

2. The blade (10) according to claim 1, comprising a reinforcing beam (50, 60) disposed in an inner cavity (C3, C8) extending from the lower surface wall (22) as far as the upper surface wall (24).

3. The blade (10) according to one of claims 1 to 2, wherein said reinforcing beam (50, 60) is centered on a median section of the blade (10) according to a section view in the radial direction.

4. The blade (10) according to one of claims 1 to 3, comprising two reinforcing beams (50, 60) disposed in two distinct inner cavities (C3, C8).

5. A gas turbine including blades (10) according to any one of claims 1 to 4.
